# EUROPÄISCHE PATENTSCHRIFT

(11) **EP 1 128 997 B1**
(45) Veröffentlichungstag und Bekanntmachung des Hinweises auf die Patenterteilung: **17.07.2002**
(21) Anmeldenummer: 99960914.2
(22) Anmeldetag: 17.11.1999
(51) Int. Cl.: B60R 25/04

(54) **FAHRBERECHTIGUNGSSYSTEM, INSBESONDERE FÜR KRAFTFAHRZEUGE**
DRIVE AUTHORIZATION SYSTEM , ESPECIALLY FOR AUTOMOBILES
SYSTEME ANTIVOL NOTAMMENT DESTINE A DES VEHICULES AUTOMOBILES

(30) Priorität: 17.11.1998 DE 19853075
(43) Veröffentlichungstag der Anmeldung: 05.09.2001
(73) Patentinhaber: ROBERT BOSCH GMBH, 70442 Stuttgart (DE)
(72) Erfinder: FEUCHTER, Uwe, D-70563 Stuttgart (DE); GEIL, Andreas, D-70193 Stuttgart (DE)
(86) Internationale Anmeldenummer: DE9903658
(87) Internationale Veröffentlichungsnummer: WO0029267

(56) Entgegenhaltungen:
- CA-A- 974 313
- DE-A- 3 306 863
- DE-C- 19 504 991

## Beschreibung

### STAND DER TECHNIK

Die vorliegende Erfindung betrifft ein Fahrberechtigungssystem, insbesondere für Kraftfahrzeuge, mit einer fahrzeugfesten elektronisch codierbaren Erkennungseinrichtung und einer entsprechenden darin einbringbaren externen elektronischen Freigabeeinrichtung, wobei bei Erkennung der Freigabeeinrichtung durch die Erkennungseinrichtung wenigstens eine fahrzeugspezifische Einrichtung freigebbar ist.

Obwohl auf beliebige Fahrzeuge anwendbar, werden die vorliegende Erfindung sowie die ihr zugrundeliegende Problematik in bezug auf ein an Bord eines Kraftfahrzeuges befindliches Fahrberechtigungssystem erläutert.

Zur Erhöhung der Sicherheit, insbesondere der Diebstahlsicherheit, von Kraftfahrzeugen ist es bekannt, diese mit einem Fahrberechtigungssysteme mit einer elektronischen Wegfahrsperre auszurüsten.

Hierzu wird üblicherweise eine fahrzeugfeste elektronisch codierbare Erkennungseinrichtung vorgesehen, die mittels einer externen, beispielsweise den mechanischen Fahrzeugschlüssel ersetzenden, elektronischen Freigabeeinrichtung, einem sogenannten Transponder, freigebbar ist. Der Transponder besitzt ein Speicherelement, in dem die notwendige Kodierung zur Freigabe der Erkennungseinrichtung abgelegt ist. Damit die Freigabeeinrichtung mit der Erkennungseinrichtung kommunizieren kann, ist diese in Nähe der Erkennungseinrichtung zu positionieren, so daß ein von der Erkennungseinrichtung, insbesondere über eine Antenne, abgestrahltes Signal von der Freigabeeinrichtung erfaßt und verarbeitet werden kann. Das Signal der Erkennungseinrichtung wird in der Freigabeeinrichtung geprüft und mit einem entsprechenden Antwortsignal erwidert, dessen Signalverlauf der elektronischen Kodierung der Erkennungseinrichtung entsprechen muß. Passen Sendesignal und Antwortsignal des Fahrberechtigungssystems zusammen, erfolgt eine Freigabe wenigstens einer fahrzeugspezifischen Einrichtung des Fahrzeuges, beispielsweise eines elektronischen Steuergerätes zur Ansteuerung einer Brennkraftmaschine des Fahrzeuges.

Bekannt ist, die Freigabeeinrichtung in einen Zündschlüssel zu integrieren. Die DE 33 06 863 Al beschreibt ein Lenkschloßsystem zur Verhinderung unbefugter Benutzung eines Kraftfahrzeuges, bei welchem mittels eines elektronischen Schlüssels die Lenkspindelsicherungseinrichtung betätigt werden kann. Das Lenkschloßsystem ist so ausgebildet, daß mit dem elektronischen Schlüssel auch die weiteren Schaltfunktionen des Lenkradschlosses ausgeführt werden können.

Hierbei ist nachteilig, daß neben der elektronischen Kommunikation zwischen der Erkennungseinrichtung und der Freigabeeinrichtung sowohl der Zündschlüssel als auch ein entsprechendes Zündschloß entsprechende aufeinander abgestimmte Formmerkmale aufweisen müssen. Aufgrund der Vielzahl unterschiedlicher Schließsysteme bei Zündschlüsseln ist hierdurch bei der Integration eines elektronischen Fahrberechtigungssystems ein erheblicher Aufwand gegeben. Die Bereitstellung des eingangs genannten Fahrberechtigungssystems zusätzlich zu einem üblichen Zündschloßsystem schafft ebenfalls einen erhöhten Aufwand.

Die DE 195 04 991 Cl beschreibt einen Startschalter für ein Kraftfahrzeug, welches zur Prüfung der Fahrberechtigung des jeweiligen Fahrers mit einem Transpondersystem ausgerüstet ist, wobei der Fahrer zur Identifizierung eine Identifizierungskarte besitzt, und in dem Fahrzeug eine entsprechende Elektronik vorgesehen ist, die die Signale der Identifizierungskarte auswertet und ggf. Signale zur Ansteuerung der Zündung und/oder weiterer für das Fahren relevanter Systemgruppen erzeugt.

### VORTEILE DER ERFINDUNG

Das erfindungsgemäße Fahrberechtigungssystem mit den Merkmalen des Anspruchs 1 weist gegenüber den bekannten Lösungsansätzen den Vorteil auf, daß das Fahrberechtigungssystem gleichzeitig auch als Zündschloßsystem dienen kann.

Die der vorliegenden Erfindung zugrundeliegende Idee besteht darin, daß die Erkennungseinrichtung bzw. der Kartenleser mit einer mechanischen Rasteinrichtung versehen ist, welche ein Fixieren der Freigabeeinrichtung bzw. Karte in mindestens einer Position, vorzugsweise der Zündung-Ein-Position, ermöglicht. Aus der lösbaren Rastposition läßt sich die Freigabeeinrichtung temporär wie ein herkömmlicher Zündschlüssel in eine Motor-Start-Position drücken und kehrt bei Loslassen nach dem Motorenstart in die Zündung-Ein-Position zurück, was der Betriebsstellung entspricht.

Diese Betriebsweise ist vom Benutzer, der ein Zündschloß gewöhnt ist, vorteilhafterweise leicht nachvollziehbar. Vorteilhaft ist auch die Einsparung eines Zündschlüssels als Zubehörteil, da seine Funktion durch die Freigabeeinrichtung übernehmbar ist.

In den Unteransprüchen finden sich vorteilhafte Weiterbildungen und Verbesserungen des in Anspruch 1 angegebenen Fahrberechtigungssystems.

Gemäß einer bevorzugten Weiterbildung ist die der einen Position entsprechende Zündschloßfunktion die Zündung-Ein-Funktion und ist die der weiteren Position entsprechende Zündschloßfunktion die Motor-Start-Funktion.

Gemäß einer weiteren bevorzugten Weiterbildung ist die Freigabeeinrichtung in mindestens noch eine weitere Position lösbar und verriegelbar bringbar, die von der Betätigungseinrichtung erkennbar ist und in der die Betätigungseinrichtung eine entsprechende weitere Zündschloßfunktion, vorzugsweise eine Zündung-Neutral-Funktion, auslöst.

Gemäß einer weiteren bevorzugten Weiterbildung ist in dem Aufnahmebereich eine federnde Raststifteinrichtung vorgesehen ist, welche mit in der Freigabeeinrichtung vorgesehenen Kerben zum lösbaren Verriegeln der Freigabeeinrichtung in der einen Position zusammenwirkt.

Gemäß einer weiteren bevorzugten Weiterbildung ist die Freigabeeinrichtung eine Chipkarte, die durch einen Schlitz in den Aufnahmebereich einführbar ist.

Gemäß einer weiteren bevorzugten Weiterbildung weist die Betätigungseinrichtung mindestens einen mechanischen und/oder optischen Positionssensor zum Erkennen der Freigabeeinrichtung in der jeweiligen Position auf.

Gemäß einer weiteren bevorzugten Weiterbildung ist die weitere Position durch Druckanwendung auf die Freigabeeinrichtung aus der einen Position bis zum Erreichen eines Anschlags erreichbar und ist eine Federeinrichtung vorgesehen, welche bei Wegfall der Druckanwendung die Freigabeeinrichtung in die eine Position zurückführt.

Gemäß einer weiteren bevorzugten Weiterbildung löst die Betätigungseinrichtung in mindestens einer der Positionen eine Kommunikation zwischen der Freigabeeinrichtung und der Erkennungseinrichtung aus.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Darstellung eines Ausführungsbeispiels des erfindungsgemäßen Fahrberechtigungssystems mit einer in einer ersten Position I befindlichen Chipkarte;
- Fig. 2: eine schematische Darstellung eines Ausführungsbeispiels des erfindungsgemäßen Fahrberechtigungssystems mit einer in einer zweiten Position II befindlichen Chipkarte;
- Fig. 3: eine schematische Darstellung eines Ausführungsbeispiels des erfindungsgemäßen Fahrberechtigungssystems mit einer in einer dritten Position III befindlichen Chipkarte;
- Figur 4: eine schematische Perspektivansicht einer üblichen Aufnahmevorrichtung;
- Figur 5: eine schematische Draufsicht auf die übliche Aufnahmevorrichtung gemäß Figur 4;
- Figur 6: einen Längsschnitt durch die.übliche Aufnahmevorrichtung gemäß Figur 4; und
- Figur 7: einen Querschnitt durch die übliche Aufnahmevorrichtung gemäß Figur 4.

### BESCHREIBUNG DER AUSFÜHRUNGSBEISPIELE

In den Figuren bezeichnen gleiche Bezugszeichen gleiche oder funktionsgleiche Elemente.

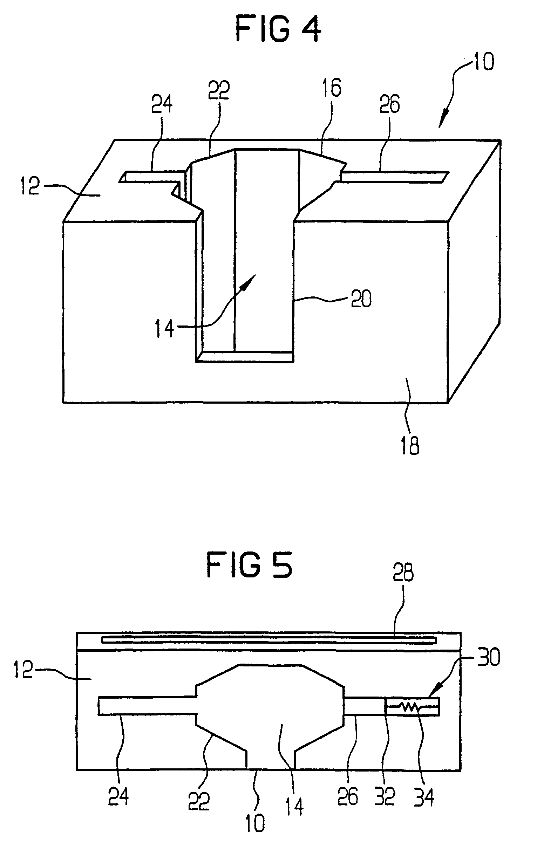

Zum besseren Verständnis der der vorliegenden Erfindung zugrundeliegenden Problematik wird zunächst mit Bezug auf Fig. 4 bis 7 ein Fahrberechtigungssystem erläutert, welches in der älteren Anmeldung DE 197 47 732.1 vom 29.10.97 offenbart ist und als Ausgangspunkt für die vorliegende Erfindung dient.

In Figur 4 ist eine Aufnahmevorrichtung 10 solch eines üblichen Fahrberechtigungssystemes für Kraftfahrzeuge gezeigt. Die nachfolgende Beschreibung bezieht sich auf den Aufbau und die Funktion der Aufnahmevorrichtung 10, wobei klar ist, daß diese an geeigneter Stelle im Kraftfahrzeug, beispielsweise an beziehungsweise in einer Armaturentafel des Kraftfahrzeuges angeordnet ist.

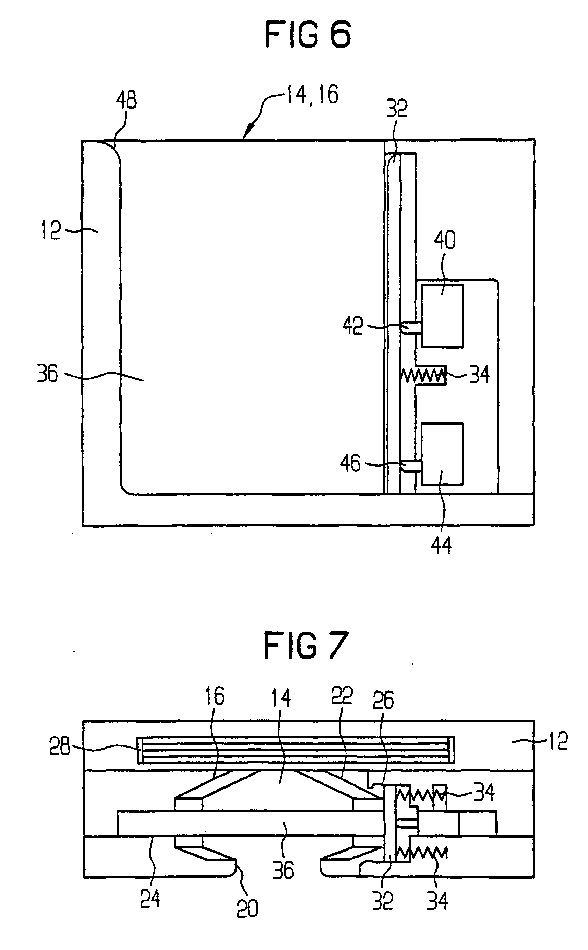

Die Aufnahmevorrichtung 10 besitzt einen quaderförmigen Grundkörper 12, in dem ein Aufnahmebereich 14 ausgebildet ist. Der Aufnahmebereich 14 wird von einer Sacköffnung 16 gebildet, die sich im wesentlichen über die gesamte Tiefe des Grundkörpers 12 erstreckt. An einer Vorderseite 18 ist die Sacköffnung 16 mit einem Schlitz 20 versehen, so daß diese zur Vorderseite 18 randoffen ist. In Draufsicht gesehen besitzt die Sacköffnung 16 einen Querschnitt, der von einem Mittelabschnitt 22 und Seitenabschnitten 24 beziehungsweise 26 gebildet wird. Im Bereich des Mittelabschnittes 22 ist der Schlitz 20 angeordnet, wie insbesondere in der in Figur 5 gezeigten schematischen Draufsicht auf die Aufnahmevorrichtung 10 deutlich wird. Durch die Abschnitte 22, 24 und 26 ergibt sich, daß die Sacköffnung 16 von einer schlitzartigen Vertiefung gebildet wird, die im Bereich des Mittelabschnittes 22 eine Aufweitung bestimmter Kontur aufweist. Die Kontur des Mittelabschnittes 22 richtet sich nach der Formgebung von verwendeten Freigabeeinrichtungen. Im gezeigten Beispiel wird der Mittelabschnitt 22 von einem Achteck gebildet. Dieser kann jedoch auch ein anders gestaltetes Vieleck, ovalförmig, kreisförmig, dreieckförmig und so weiter sein.

Wie die Draufsicht in Figur 5 verdeutlicht, besitzt die Aufnahmevorrichtung 10 ferner eine Antenne 28, die der Kommunikation mit einer in den Aufnahmebereich 14 einbringbaren Freigabeeinrichtung dient. Die Antenne 28 ist zum Austausch von Hochfrequenzsignalen ausgelegt. Dem Aufnahmebereich 14 ist ferner eine Betätigungseinrichtung 30 zugeordnet, die ein axial zur Sacköffnung 16 verlaufendes Betätigungsmittel 32 aufweist, das gegen die Kraft wenigstens eines Federelementes 34 radial zur Sacköffnung 16 Verlagerbarist. Im Ruhezustand liegt das Betätigungsmittel 32 im Übergangsbereich zwischen dem Mittelabschnitt 22 und 3 dem Seitenabschnitt 26 der Sacköffnung 16.

In den Figuren 6 und 7 wird der Aufbau der Aufnahmevorrichtung 10 anhand eines Längs- beziehungsweise eines Querschnittes weiter verdeutlicht. Dort ist die Aufnahmevorrichtung 10 mit einer eingeschobenen elektronischen Freigabeeinrichtung 36 gezeigt, die beispielsweise von einer Chipkarte 38, wie Figur 5 in einer schematischen Perspektivansicht verdeutlicht, gebildet sein kann. Die geometrische Gestaltung der Freigabeeinrichtung 36 ist hierbei speziellerweise eine Chipkarte 38, die auf das Kraftfahrzeug zugeschnitten sein oder dem allgemein bekannten Format von Telefonkarten und Bankkarten entsprechen kann. Die Sacköffnung 16, insbesondere die Seitenabschnitte 24 und 26 sind hierbei auf die Dicke der Chipkarte 38 abgestimmt, so daß diese spielarm in die Sacköffnung 16 einbringbar ist. Die Freigabeeinrichtung 36 weist nicht näher dargestellte elektronische Schaltungen auf, mittels denen über die HF-Antenne 28 eine Kommunikation mit der Erkennungseinrichtung möglich ist. Hierzu kann die Aufnahmevorrichtung 10 ebenfalls nicht näher dargestellte Schaltungsbestandteile, beispielsweise in Form von Mikrocontrollern, Speichern und so weiter besitzen.

Durch Einführen der Freigabeeinrichtung 36 in die Sacköffnung 16 wird das Betätigungsmittel 32 gegen die Kraft der Federelemente 34 verlagert. Wie die Schnittdarstellung Figur 6 verdeutlicht, sind die Federelemente 34 nicht symmetrisch zum Betätigungssmittel 32 angeordnet, sondern befinden sich in einem unteren Bereich der Sacköffnung 16. Durch die unsymmetrische Lagerung des Betätigungsmittels 32 mittels der Federelemente 34 ist diese vorzugsweise als Taumelplatte ausgebildet. Hierdurch wird erreicht, daß bei Einführen der Freigabeeinrichtung 36 das Betätigungsmittel 32 nicht sogleich über seine gesamte Länge gegen die Kraft der Federelemente 34 verschoben wird. Mit Beginn des Einführens der Freigabeeinrichtung 36 wird zunächst der obere Abschnitt des Betätigungsmittels 32 gegen die Kraft des Federelementes 34 verlagert, so daß ein erstes Schaltmittel 40, dessen Schaltstift 42 im Bewegungsweg des Betätigungsmittels 32 liegt, betätigt wird. Erst bei nahezu vollständigem Einführen der Freigabeeinrichtung 36 wird auch der untere Abschnitt des Betätigungsmittels 32 gegen die Kraft der Federelemente 34 verlagert, so daß dann ein zweites Schaltmittel 44, dessen Schaltstift 46 ebenfalls im Bewegungsweg des Betätigungsmittels 32 liegt, betätigbar ist. Zum leichteren Einführen der Freigabeeinrichtung 36 kann im Bereich der Mündung der Sacköffnung 16 eine Phase 48 vorgesehen sein. Die Schaltmittel 40 und 44 sind über nicht näher dargestellte Verbindungen mit der Elektronik der Aufnahmevorrichtung 10 beziehungsweise des Fahrberechtigungssystems verbunden. Diese Elektronik kann entweder in der Aufnahmevorrichtung 10 oder an anderer Stelle, beispielsweise in einem Steuergerät des Kraftfahrzeuges, integriert sein.

Durch die unabhängig voneinander betätigbaren Schaltmittel 40 und 44 läßt sich die Positionierung der Freigabeeinrichtung 36 detektieren. Bei Einführen der Freigabeeinrichtung 36 wird zunächst das Schaltmittel 40 und erst bei Erreichen der Endposition das Schaltmittel 44 betätigt. Somit kann über Betätigung des Schaltmittels 44 das Erreichen der endgültigen Position der Freigabeeinrichtung 36 detektiert werden. An die Betätigung des Schaltmittels 44 kann eine Auslösung der Abfrage des in die Freigabeeinrichtung 36 integrierten Transponders gekoppelt sein. Beispielsweise kann hierdurch eine Elektronik der Erkennungseinrichtung die Antenne 28 ansteuern, die daraufhin mit dem Transponder in Kommunikation tritt und über eine Codeabfrage die Berechtigung der eingebrachten Freigabeeinrichtung 36 prüft. Wird die Berechtigung der Freigabeeinrichtung 36 erkannt, kann über die Elektronik eine Inbetriebnahme des Kraftfahrzeuges, beispielsweise durch Deaktivierung einer elektronischen Wegfahrsperre, Bereitstellen einer Versorgungsspannung zum Inbetriebnehmen des Kraftfahrzeuges und so weiter erlaubt werden.

Während des Betriebes des Kraftfahrzeuges verbleibt die Freigabeeinrichtung 36 in der Aufnahmevorrichtung 10. Hierbei wird diese über das Betätigungsmittel 32, durch die Federkraft des wenigstens einen Federelementes 34, mit einer Haltekraft beaufachlagt, so daß ein unabsichtliches Herausfallen aufgrund während des Betriebes des Kraftfahrzeuges auftretender Vibrationen nicht möglich ist. Gleichzeitig kann durch die Ausbildung des Schlitzes 20 jederzeit die positionsgerechte Lage der Freigabeeinrichtung 36 überprüft werden. Ferner kann durch den Schlitz 20 erreicht werden daß, wenn die Freigabeeinrichtung 36 beispieleweise an einem Schlüsselbund angebracht ist, an dem beispieleweise nicht zum Betrieb des Kraftfahrzeuges notwendige Schlüssel oder dergleichen hängen, diese gemeinsam am Schlüsselbund verbleiben können. Somit kann die Freigabeeinrichtung 36 in die Aufnahmevorrichtung 10 eingebracht werden, ohne daß diese von dem Schlüsselbund entfernt werden muß, da durchlldie Ausbildung des Schlitzes 20 ein entsprechender Freiraum zur Verfügung steht.

Auch kann in die Aufnahmevorrichtung 10 eine Anzeigeeinrichtung integriert sein, die bei erfolgter Freigabe der Inbetriebnahme des Kraftfahrzeuges, beispieleweise durch verschiedenfarbige Leuchtanzeigen, die Gültigkeit der verwendeten Freigabeeinrichtung 36 signalisiert. Ferner kann eine mechanische Verriegelung vorgesehen sein, die zusätzlich zu der über das Federelement 34 aufgebrachten Haltekraft die Freigabeeinrichtung 36 in ihrer Position hält. Anstelle einer mechanischen Verriegelung kann beispieleweise auch eine elektromagnetische Verriegelung vorgesehen sein. Ist die Identifizierung der Freigabeeinrichtung 36 erfolgt und die Inbetriebnahme des Kraftfahrzeuges freigegeben, wird ein Starten des Antriebsmotors des Kraftfahrzeuges zugelassen.

Die Verwendung eines zusätzlichen Zündschlüssels oder dergleichen ist bei diesem System nicht notwendig. Der Startvorgang selbst kann vorgeschlagenerweise entweder allein nach Auslösen des Schaltmittels 44, das heißt nach Erreichen der Endposition einer Freigabeeinrichtung 36 in der Aufnahmevorrichtung 10 und nach deren erfolgreicher Identifizierung, automatisch ablaufen oder mittels eines speziellen Startauslösekontaktes, beispielsweise eines Tasters, eines Drehschaltes oder dergleichen, von Hand gesteuert werden.

Entsprechend der Auslegung des Fahrberechtigungssystems kann der Betrieb des Antriebsmotors des Kraftfahrzeuges durch Herausnehmen der Freigabeeinrichtung aus der Aufnahmevorrichtung 10 unterbrochen oder nicht unterbrochen werden. Bei Herausziehen der Freigabeeinrichtung aus dem Aufnahmebereich 14 öffnet zunächst das Schaltmittel 44 und danach das Schaltmittel 40. Durch Öffnen des Schaltmittels 40 wird ein vollständiges Entfernen der Freigabeeinrichtung 36 erkannt, so daß über eine entsprechende Elektronik eine Abschaltung des Antriebsmotors veranlaßt werden kann. Aus Sicherheitsgründen kann vorgesehen sein, daß neben dem Entfernen der Freigabeeinrichtung 36 aus der Aufnahmevorrichtung 10 weitere Signale zur Verfügung stehen müssen, die beispielsweise den Stillstand des Kraftfahrzeuges signalisieren, um den Motorbetrieb zu stoppen. Hierzu können beispielsweise Drehzahlwerte an den Rädern oder dem Getriebe des Kraftfahrzeuges abgegriffen werden.

Anstelle der mechanisch betätigbaren Schaltmittel 40 und 44 können auch optisch, elektronisch oder auf andere geeignete Weise betätigbare Schaltmittel vorgesehen sein.

Durch die Ausbildung des Aufnahmebereiches 14, insbesondere durch den Mittelabschnitt 22 wird sichergestellt, daß die Aufnahmevorrichtung 10 gleichzeitig für den Einsatz unterschiedlich gestalteter Freigabeeinrichtungen 36 geeignet ist. So kann beispielsweise die Freigabeeinrichtung eine unregelmäßige ovale Form aufweisen. Diese Freigabeeinrichtung 36 kann beispielsweise mittels einer Öse an einem Schlüsselbund angeordnet sein. Aufgrund der relativ kleinen kompakten Bauform ist diese in einfacher Weise mit dem Schlüsselbund mitführbar. Eine äußere Formgestalt der Freigabeeinrichtung 36 entspricht dann im wesentlichen dem Querschnitt des Mittelabschnittes 22, so daß die Freigabeeinrichtung 36 in analoger Weise wie die Chipkarte 38 in die Aufnahmevorrichtung 10 einführbar ist und über eine Längsfläche in Anlagekontakt mit dem Betätigungsmittel 32 kommt und somit einerseits die Schaltmittel 40 und 44 auslösen kann und andererseits über das Federelement 34 mit einer Haltekraft beaufschlagbar ist.

Der Formgestalt der Freigabeeinrichtung 36 sind hierbei weitgehend keine Grenzen gesetzt. Zusätzlich kann die Freigabeeinrichtung 36 Schaltmittel aufweisen, die beispielsweise dem fernbedienten Ent- und Verriegeln von Kraftfahrzeugtüren dienen. Hierzu können Infrarot-, Ultraschall-, LF- beziehungsweise UHF-Sende- und -Empfangsmittel verwendet werden.

Die Freigabeeinrichtung 36 kann auch als Schlüsselanhänger (Key fob) ausgebildet sein, wenn der Aufnahmebereich 14 der Aufnahmevorrichtung 10 eine entsprechende Formgestalt aufweist.

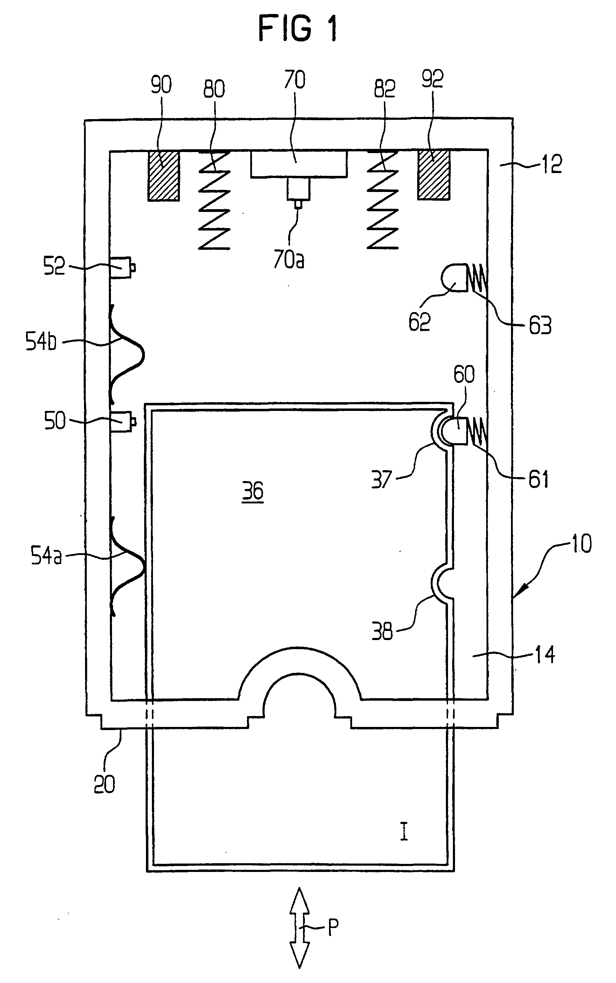

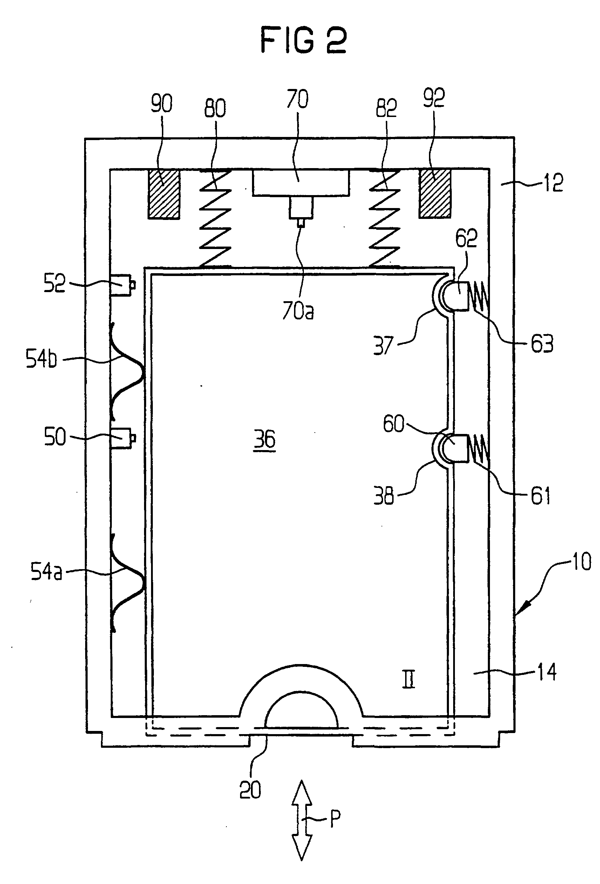

Fig. 1 bis 3 zeigen eine schematische Darstellung eines Ausführungsbeispiels des erfindungsgemäßen Fahrberechtigungssystems mit einer in einer ersten Position I, II bzw. III befindlichen Chipkarte.

In den Figuren 1 bis 3 bezeichnen zusätzlich zu den bereits eingeführten Bezugszeichen P eine Pfeilrichtung entsprechend der Einschub/Auszug-Richtung der Chipkarte 36, 50 einen ersten optischen Positionssensor, 52 einen zweiten optischen Positionssensor, 54a und 54b Blattfedern, 60 einen ersten Raststift, 61 eine erste Raststiftfeder, 62 einen zweiten Raststift, 63 eine zweite Raststiftfeder, 70 einen Schaltkontakt mit einem Schaltkontaktstift 70a, 80 und 82 Federeinrichtungen sowie 90 und 92 Anschläge.

Das Fahrberechtigungssystem für Kraftfahrzeuge gemäß diesem Ausführungsbeispiel hat in seiner Erkennungseinrichtung eine Aufnahmevorrichtung 10, die einen Aufnahmebereich 14 ausbildet, in dem die Freigabeeinrichtung 36 in Form der Chipkarte in einer Position I und in einer Position II durch den Schlitz 20 lösbar und verriegelbar einbringbar ist.

Die in dem Aufnahmebereich 14 vorgesehene federnde Raststifteinrichtung 60-63 wirkt mit den in der Freigabeeinrichtung 36 vorgesehenen Kerben 37, 38 zum lösbaren Verriegeln der Freigabeeinrichtung 36 in den Positionen I und II zusammen. Dabei wird ein Gegendruck durch die Blattfedern 54a, 54b angelegt. Die mechanische Führung senkrecht zur Zeichnungsebene ist aus Vereinfachungsgründen nicht gezeigt.

Die in dem Aufnahmebereich 14 vorgesehene Betätigungseinrichtung weist den optischen Positionssensor 50 bzw. 52 zum Erkennen der Freigabeeinrichtung 36 in der jeweiligen Position I bzw. II auf.

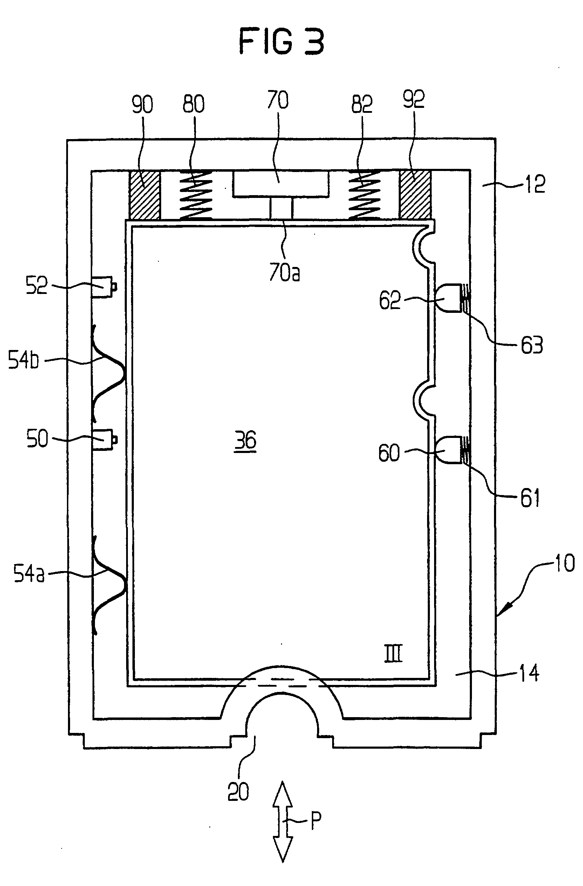

Die Freigabeeinrichtung 36 im Aufnahmebereich 14 ist aus der Position II in eine weitere Position III bringbar, in der eine elastische Rückstellkraft zum Rückstellen der Freigabeeinrichtung in Richtung der Position II anlegbar ist. Wie insbesondere Fig. 3 entnehmbar, ist die weitere Position III durch Druckanwendung, z.B. durch den Finger eines Benutzters am Schlitz, auf die Freigabeeinrichtung 36 aus der einen Position II bis zum Anschlag 90, 92 erreichbar ist. Dabei wird die Federeinrichtung 80, 82 komprimiert, welche bei Wegfall der Druckanwendung die Freigabeeinrichtung in die Position II zurückführt.

Ein nicht dargestellter Elektronikteil der in dem Aufnahmebereich 14 vorgesehenen Betätigungseinrichtung löst eine der jeweiligen Position I, II bzw. III entsprechende Zündschloßfunktion sowie eine spezielle Kommunikation zwischen der Freigabeeinrichtung 36 und der Erkennungseinrichtung in der Position I aus.

Bei diesem Beispiel ist die Zündschloßfunktion der Position I die Zündung-Neutral-Funktion, die der Position II entsprechende Zündschloßfunktion die Zündung-Ein-Funktion und die der Position III entsprechende Zündschloßfunktion die Motor-Start-Funktion.

Im folgenden wird ein Beispiel eines Verfahren zum Betreiben des Fahrberechtigungssystems nach Fig. 1 bis 3 erläutert.

Gemäß Fig. 1 erfolgt zunächst ein Einführen der Freigabeeinrichtung 36 in die rastende Position I zum Aktivieren der Zündung-Neutral-Funktion, wobei gleichzeitig die Identifizierung stattfindet und bei Erkennung der Freigabeeinrichtung 36 durch die Erkennungseinrichtung eine fahrzeugspezifische Einrichtung freigebbar ist, beispielsweise ein elektronischen Steuergerätes zur Ansteuerung der Brennkraftmaschine des Fahrzeuges und/oder die Stromversorgung. Bei erfolgreicher Identifizierung kann z.B. in dieser Stellung, wie üblich, die Radiostromversorgung o.ä. freigegeben werden.

Ein Drücken der Freigabeeinrichtung 36 in die rastende Position II führt zum Aktivieren der Zündung-Ein-Funktion, d.h. dem Aufleuchten der Kontrolleuchten für Batterie und Ölstand, der ABS-Prüfung, dem Vorglühen beim Dieselmotor usw.

Ein Drücken der Freigabeeinrichtung 36 in die Position III führt dann zum Aktivieren der Motor-Start-Funktion, d.h. Betätigung des Anlassers, solange die Druckanwendung beibehalten wird.

Ein Beenden der Druckanwendung nach erfolgtem Motorenstart durch Loslassen der Freigabeeinrichtung 36 führt zur Rückführung in die Position II, worin der Motor in Betrieb gehalten wird.

Ein Zurückziehen der Freigabeeinrichtung 36 aus der Position II in die Position I führt zur Abschaltung von Zündung und Motor. Damit die nicht versehentlich geschieht oder damit bei laufendem Motor nicht versehentlich der Anlasser durch Bewegung in die Position III erneut betätigt wird, kann eine zusätzliche gesondert lösbare Verriegelung vorgesehen sein.

Schließlich führt ein Entnehmen der Freigabeeinrichtung 36 zum Aktivieren der Zündung-Aus-Funktion und Abschalten des Motors sowie ggfs. zur Einschaltung der Wegfahrsperrfunktion.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere ist die Erfindung nicht auf die erläuterten mechanischen Rasteinrichtungen bzw. Positionserkennungseinrichtungen beschränkt. Auch kann nur eine lösbar verriegelbare Position (z.B. II) zusätzlich zur Startposition vorgesehen sein, oder es können drei oder mehr lösbar verriegelbare Positionen vorgesehen werden.

Auch kann statt der Chipkarte ein Schlüsselanhänger o.ä. anstelle eines Zündschlüssels verwendet werden.

## Patentansprüche

1. Fahrberechtigungssystem, insbesondere für Kraftfahrzeuge, mit:
einer fahrzeugfesten elektronisch codierbaren Erkennungseinrichtung und einer entsprechenden darin einbringbaren externen elektronischen Freigabeeinrichtung (36);
wobei bei Erkennung der Freigabeeinrichtung (36) durch die Erkennungseinrichtung wenigstens eine fahrzeugspezifische Einrichtung freigebbar ist;
die Erkennungseinrichtung eine Aufnahmevorrichtung (10) aufweist, die einen Aufnahmebereich (14) ausbildet, in dem die Freigabeeinrichtung (36) in mindestens einer Position (II) lösbar und verriegelbar einbringbar ist;
die Freigabeeinrichtung (36) im Aufnahmebereich (14) aus der einen Position (II) in eine weitere Position (III) bringbar ist, in der eine elastische Rückstellkraft zum Rückstellen der Freigabeeinrichtung in Richtung der einen Position (II) anlegbar ist; und wobei
in dem Aufnahmebereich (14) eine von der Freigabeeinrichtung (36) auslösbare Betätigungseinrichtung (50; 52; 70, 70a) zum Erkennen der Freigabeeinrichtung (36) in der einen und der weiteren Position (II, III) und zum Auslösen einer jeweiligen entsprechenden Zündschloßfunktion vorhanden ist,
**dadurch gekennzeichnet, daß**
eine zusätzliche gesondert lösbare Verriegelung für ein Verriegeln der Freigabeeinrichtung (36) in der einen Position (II) vorgesehen ist.

2. Fahrberechtigungssystem nach Anspruch 1, **dadurch gekennzeichnet, dass** die der einen Position (II) entsprechende Zündschloßfunktion die Zündung-Ein-Funktion und die der weiteren Position (III) entsprechende Zündschloßfunktion die Motor-Start-Funktion ist.

3. Fahrberechtigungssystem nach Anspruch 1 oder 2, **dadurch gekennzeichnet, daß** die Freigabeeinrichtung (36) in mindestens noch eine weitere Position (I) lösbar und verriegelbar bringbar ist, die von der Betätigungseinrichtung (50; 52; 70, 70a) erkennbar ist und in der die Betätigungseinrichtung (50; 52; 70, 70a) eine entsprechende weitere Zündschloßfunktion, vorzugsweise eine Zündung-Neutral-Funktion, auslöst.

4. Fahrberechtigungssystem nach einem der vorhergehenden Ansprüche, **dadurch gekennzeichnet, daß** in dem Aufnahmebereich (14) eine federnde Raststifteinrichtung (60-63) vorgesehen ist, welche mit in der Freigabeeinrichtung (36) vorgesehenen Kerben (37, 38) zum lösbaren Verriegeln der Freigabeeinrichtung (36) in der einen Position (II) zusammenwirkt.

5. Fahrberechtigungssystem nach einem der vorhergehenden Ansprüche, **dadurch gekennzeichnet, daß** die Freigabeeinrichtung (36) eine Chipkarte ist, die durch einen Schlitz (20) in den Aufnahmebereich (14) einführbar ist.

6. Fahrberechtigungssystem nach einem der vorgehenden Ansprüche, **dadurch gekennzeichnet, daß** die Betätigungseinrichtung (50; 52; 70, 70a) mindestens einen mechanischen und/oder optischen Positionssensor (50; 52) zum Erkennen der Freigabeeinrichtung (36) in der jeweiligen Position (I, II, III) aufweist.

7. Fahrberechtigungssystem nach einem der vorhergehenden Ansprüche, **dadurch gekennzeichnet, daß** die weitere Position (III) durch Druckanwendung auf die Freigabeeinrichtung (36) aus der einen Position (II) bis zum Erreichen eines Anschlags (90, 92) erreichbar ist und eine Federeinrichtung (80, 82) vorgesehen ist, welche bei Wegfall der Druckanwendung die Freigabeeinrichtung in die eine Position (II) zurückführt.

8. Fahrberechtigungssystem nach einem der vorhergehenden Ansprüche, **dadurch gekennzeichnet, daß** die Betätigungseinrichtung (50; 52; 70, 70a) in mindestens einer der Positionen (I, II, III) eine Kommunikation zwischen der Freigabeeinrichtung (36) und der Erkennungseinrichtung auslöst.

## Claims

1. Driving authorization system, in particular for motor vehicles, having:
an electronically codeable detection device which is fixed to the vehicle and a corresponding external, electronic enabling device (36) which can be introduced into the latter;
it being possible to enable at least one vehicle-specific device when the enabling device (36) is detected by the detection device;
the detection device having a receptacle device (10) which forms a receptacle region (14) in which the enabling device (36) can be introduced so as to be releasable and lockable in at least one position (II);
it being possible to move the enabling device (36) in the receptacle region (14) from the one position (II) into a further position (III) in which an elastic restoring force can be applied to restore the enabling device in the direction of the one position (II); and
there being in the receptacle region (14) an activation device (50; 52; 70, 70a), which can be triggered by the enabling device (36), for detecting the enabling device (36) in the one position (II) and in the further position (III) and for triggering a respective corresponding ignition lock function,
**characterized in that**
an additional separately releaseable lock is provided for locking the enabling device (36) in the one position (II).

2. Driving authorization system according to Claim 1, **characterized in that** the ignition lock function which corresponds to the one position (II) is the ignition on function, and the ignition lock function corresponding to the further position (III) is the engine start function.

3. Driving authorization system according to Claim 1 or 2, **characterized in that** the enabling device (36) can also be moved in a releasable and lockable fashion into at least one further position (I) which can be detected by the activation device (50; 52; 70, 70a) and in which the activation device (50; 52; 70, 70a) triggers a corresponding further ignition lock function, preferably an ignition neutral function.

4. Driving authorization system according to one of the preceding claims, **characterized in that** a sprung latching pin device (60-63) which interacts with notches (37, 38), provided in the enabling device (36), for releasably locking the enabling device (36) in the one position (II).

5. Driving authorization system according to one of the preceding claims, **characterized in that** the enabling device (36) is a chip card which can be inserted into the receptacle region (14) through a slot (20).

6. Driving authorization system according to one of the preceding claims, **characterized in that** the activation device (50; 52; 70, 70a) has at least one mechanical and/or optical position sensor (50; 52) for detecting the enabling device (36) in the respective position (I, II, III).

7. Driving authorization system according to one of the preceding claims, **characterized in that** the further position (III) can be reached by applying pressure to the enabling device (36) from the one position (II) until a stop (90, 92) is reached, and a spring device (80, 82) is provided which returns the enabling device to the one position (II) when the application of pressure ceases.

8. Driving authorization system according to one of the preceding claims, **characterized in that** the activation device (50; 52; 70, 70a) triggers communication between the enabling device (36) and the detection device in at least one of the positions (I, II, III).

## Revendications

1. Système antivol notamment pour véhicule automobile comprenant :
- une installation de reconnaissance à codage électronique, appartenant au véhicule et une installation de libération (36) électronique externe s'introduisant dans celle-ci, et
- en cas de reconnaissance de l'installation de libération (36) par l'installation de reconnaissance, au moins une installation spécifique au véhicule est libérée,
- l'installation de reconnaissance comporte un dispositif de réception (10) qui réalise une zone de réception (14) dans laquelle l'installation de libération (36) peut être libérée dans au moins une position (II) et verrouillée,
- l'installation de libération (36) dans la zone de réception (14) peut être conduite d'une première position (II) dans une autre position (III) dans laquelle une force de rappel élastique rappelle l'installation de libération en direction de la position (II), et
- dans la zone de réception (14), une installation d'actionnement (50, 52, 70, 70a) déclenchée par l'installation de libération (36), pour reconnaître l'installation de libération (36), est prévue dans une première et dans autre position (II, III) et pour déclencher une fonction de serrure de contact correspondante,
**caractérisé en ce que**
un verrouillage amovible particulier supplémentaire est prévu pour un verrouillage de l'installation de libération (36) dans la position (II).

2. Système antivol de véhicule selon la revendication 1,
**caractérisé en ce que**
la fonction de serrure d'allumage correspondant à la position (II) est la fonction de mise en route de l'allumage et la fonction de serrure de contact correspondant à l'autre position (III) est la fonction de démarrage du moteur.

3. Système antivol de véhicule selon la revendication 1 ou 2,
**caractérisé en ce que**
l'installation de libération (36) peut être mise dans au moins une autre position (I), de manière amovible ou verrouillable, cette position étant reconnue par l'installation d'actionnement (50, 52, 70, 70a) et dans cette position, l'installation d'actionnement (50, 52, 70, 70a) déclenche une autre fonction de serrure d'allumage de préférence une fonction neutre d'allumage.

4. Système antivol de véhicule selon l'une quelconque des revendications précédentes,
**caractérisé en ce que**
dans la zone de réception (14) il est prévu une installation à goupille d'encliquetage élastique (60-63) qui coopère avec des encoches (37, 38) prévues dans l'installation de libération (36) pour verrouiller de manière amovible l'installation de libération (36) dans la position (II).

5. Système antivol de véhicule selon l'une quelconque des revendications précédentes,
**caractérisé en ce que**
l'installation de libération (36) est une carte à puce qui s'introduit dans une fente (20) de la zone de réception (14).

6. Système antivol de véhicule selon l'une quelconque des revendications précédentes,
**caractérisé en ce que**
l'installation d'actionnement (50, 52, 70, 70a) comporte au moins un capteur de position mécanique et/ou optique (50, 52) pour reconnaître l'installation de libération (36) dans la position respective (I, II, III).

7. Système antivol de véhicule selon l'une quelconque des revendications précédentes,
**caractérisé en ce que**
l'autre position (III) est atteinte par application d'une pression sur l'installation de libération (36) en partant d'une position (II) jusqu'à atteindre une butée (90, 92) et il est prévu une installation de ressort (80, 82) qui, lorsque disparaît la pression, rappelle l'installation de libération dans la position (II).

8. Système antivol de véhicule selon l'une quelconque des revendications précédentes,
**caractérisé en ce que**
l'installation d'actionnement (50, 52, 70, 70a) déclenche dans au moins l'une des positions (I, II, III), une communication entre l'installation de libération (36) et l'installation de reconnaissance.
